Europäisches Patentamt

European Patent Office

Office européen des brevets

(19)

(11) Publication number: **0 419 177 A2**

## (12) EUROPEAN PATENT APPLICATION

(21) Application number: **90310143.4**

(51) Int. Cl.⁵: **G06F 1/16, G06F 15/02**

(22) Date of filing: **17.09.90**

(30) Priority: **20.09.89 JP 243872/89**

(43) Date of publication of application:
**27.03.91 Bulletin 91/13**

(84) Designated Contracting States:
**DE FR GB NL**

(71) Applicant: **SONY CORPORATION**
**7-35 Kitashinagawa 6-Chome Shinagawa-ku**
**Tokyo 141(JP)**

(72) Inventor: **Kato, Koichi, c/o Patents Division**
**Sony corporation, 6-7-35, Kitashinagawa**
**Shinagawa-ku, Tokyo 141(JP)**

(74) Representative: **Purvis, William Michael**
**Cameron et al**
**D. Young & Co. 10 Staple Inn**
**London WC1V 7RD(GB)**

(54) **Personal computer.**

(57) A portable computer (1) comprises a first casing (4) having an input and display portion (2), a second casing (8) having a signal processing circuit and a rotatable coupling member coupling the first (4) and second (8) casings, wherein the rotatable coupling member is rotatable between a first position in which the input and display portion (2) is covered with the second casing (8) and a second position in which the input and display portion (2) is exposed to make input operation possible. Thus, when an input operation is not to be performed, the input and display portion (8) is covered with the second casing (8), thereby reducing the risk that the input and display portion (2) will be damaged. Also, since the input and display portion (2) is protected by the casing (8) other than its own casing, its own casing (4) can be made compact in size and therefore the input operation can be carried out with ease.

FIG. 3

EP 0 419 177 A2

## PERSONAL COMPUTER

Electronic apparatus such as a word processor or a hand-held computer may include an input and display portion serving as an input operation surface and an information display screen.

In such electronic apparatus, the input and display portion has been provided on the upper surface of a casing in which the signal processing circuit and a power source portion are accommodation. Since the input and display portion is exposed on the upper surface of the casing, there is then the substantial risk that the input and display portion will be broken when carried about.

Further, the casing is unduly large in size since the signal processing circuit and the power source portion are accommodated within one casing so that, if the planar shape thereof is made small, then the thickness thereof must be increased considerably. Due to this increased thickness, it is very difficult for the user to perform an input operation, in particular, to input hand-written data into the electronic apparatus by using an input pen.

According to the invention there is provided a portable computer comprising:

(a) display means;

(b) input means for inputting information;

(c) an action surface comprising a display screen visually to confirm the display means and an input surface of the input means provided flush with each other;

(d) a first casing including the display means and the input means;

(e) a signal processing circuit to process the information inputted from the input means and to supply display information to the display means;

(f) a second casing including the signal processing circuit; and

(g) coupling means rotatably to couple the first and second casings, wherein the coupling means allows rotation between first and second positions, the first position being a position in which the action surface is covered by the second casing and the second position being a position in which the action surface is exposed so that an input operation on the input means and the display means can be visually confirmed.

Such a portable computer can have a casing with an input and display portion which can be compact in size and particularly not of undue thickness which is of importance if the portable computer utilizes a so-called hand-written input system.

The invention is diagrammatically illustrated by way of example in the accompanying drawings, in which:-

Figure 1 is a perspective view from above of a portable computer according to the invention;

Figure 2 is a perspective view from below of the portable computer of Figure 1;

Figure 3 is a perspective view of the portable computer of Figure 1, and particularly illustrating an input and display portion and a computer body portion in an open position;

Figure 4A is an exploded perspective view of the input and display portion of the portable computer of Figure 3;

Figure 4B is an exploded perspective view of the computer body portion of the portable computer of Figure 3;

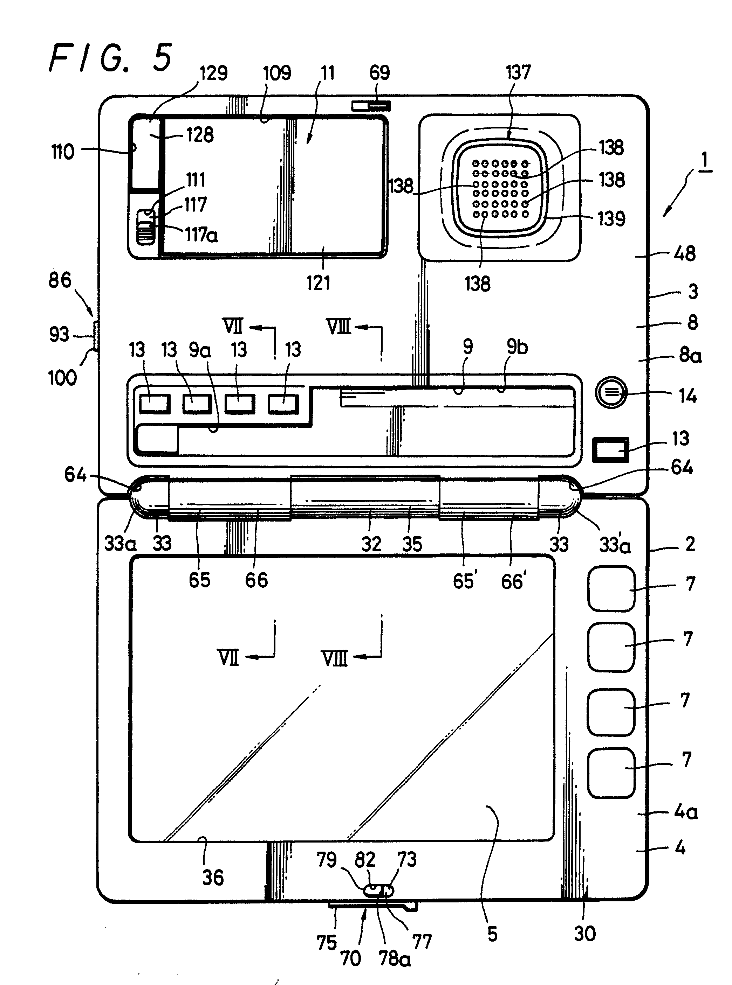

Figure 5 is a plan view of a portable computer according to the invention, and illustrating the condition in which the input and display portion and the computer body portion are open;

Figure 6 is a plan view of a portable computer according to the invention, and illustrating the condition in which the input and display portion and the computer body portion are open, from which upper parts thereof are removed;

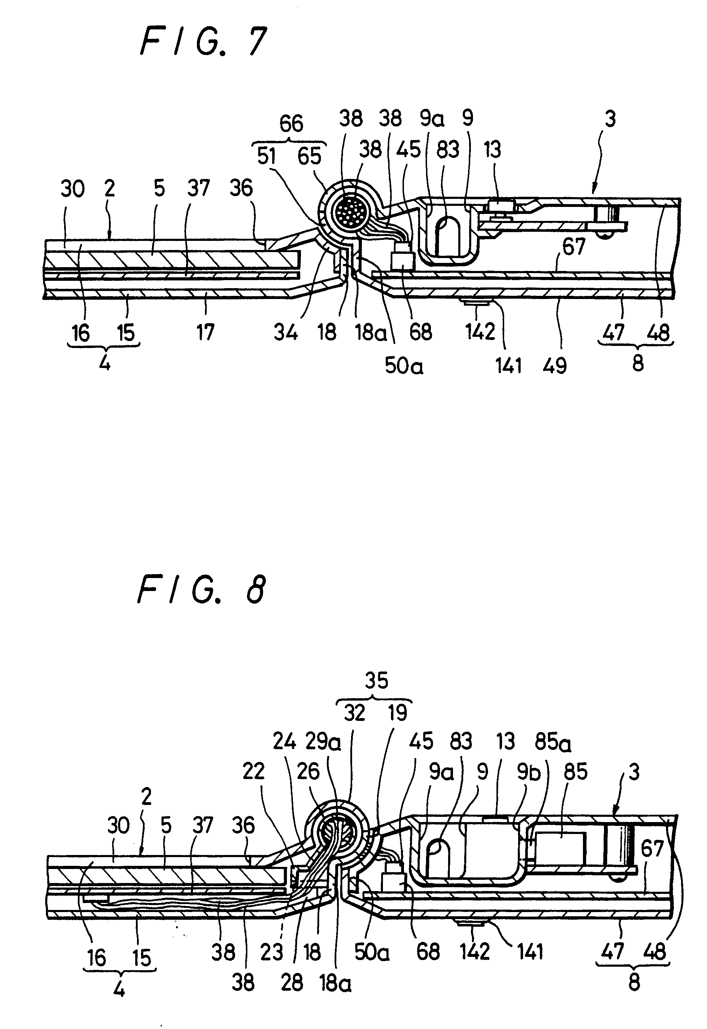

Figure 7 is a cross-sectional view taken on line VII-VII of Figure 5;

Figure 8 is a cross-sectional view taken on line VIII-VIII of Figure 5;

Figures 9A to 9D are fragmentary, cross-sectional views of a main portion of a portable computer according to the invention, and illustrating to an enlarged scale the condition in which the input and display portion and the computer body portion are closed and locked in that order, respectively;

Figure 10 is an exploded perspective view of the main portion of the computer body, and illustrating the same in a separated condition of upper and lower parts;

Figures 11A to 11C are cross-sectional views of the main portion of a portable computer according to the invention, and illustrating a condition in which a lid of a memory card loading portion is opened, in that order, respectively;

Figures 12A to 12C are partially cutaway plan views of the main portion of a portable computer according to the invention, and illustrating to an enlarged scale the condition in which the lid of the memory card loading portion is locked, in that order, respectively;

Figures 13A to 13F are cross-sectional views of the main portion of a portable computer according to the invention, and illustrating to an enlarged scale the condition in which a lid plate of a battery compartment is locked and again released from its locked state, in that order, respectively;

Figures 14A to 14C are cross-sectional views illustrating the condition in which the lid plate of the battery compartment is locked, in that order, and in the direction perpendicular to Figures 13A to 13C;

Figure 15A is a partially cutaway perspective view illustrating a button type battery holder portion of a portable computer according to the invention;

Figure 15B is a cross-sectional view illustrating to an enlarged scale the condition in which a button type battery is accommodated within the button type battery holder of Figure 15A;

Figure 16 is a pictorial representation of a portable computer according to the invention, and illustrating the condition in which the user operates a voice memory;

Figure 17 is a side view illustrating the condition in which a handset portion is set in a handset mounting portion; and

Figure 18 is a block circuit diagram showing a hardware arrangement of the portable computer according to the invention.

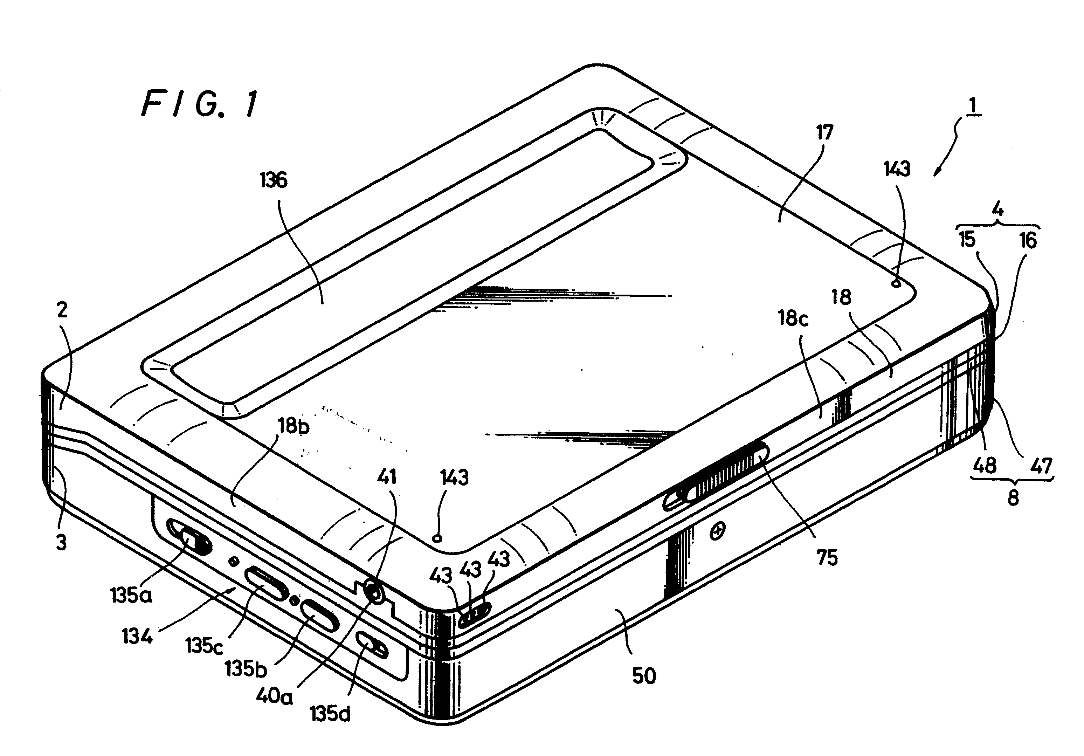

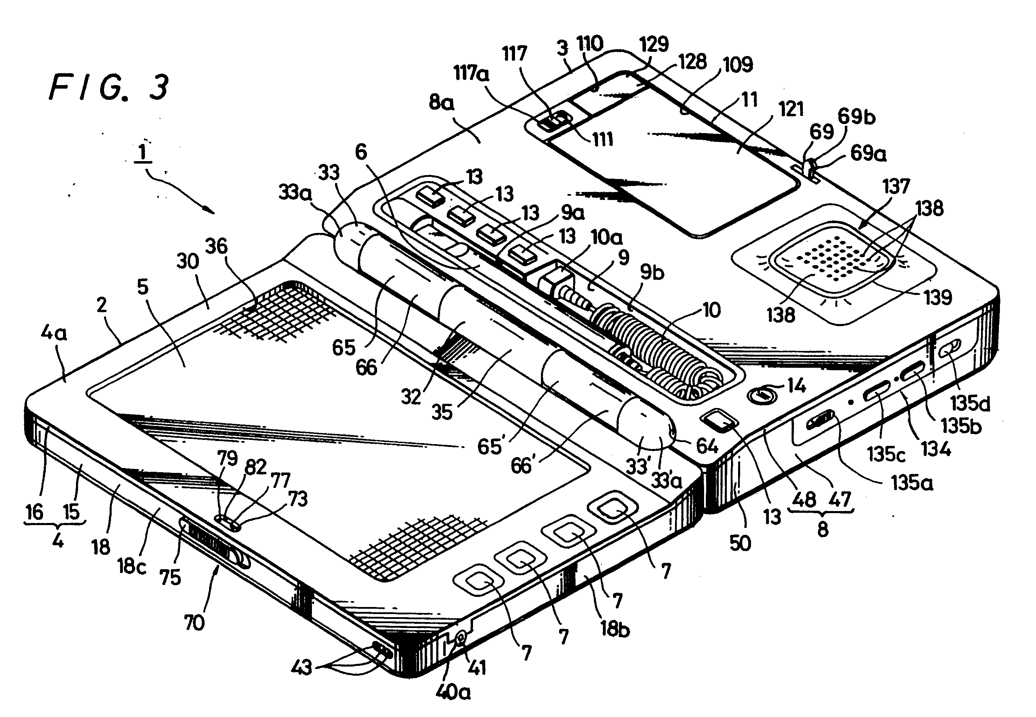

Referring to the drawings a personal computer 1 comprises an input and display portion 2 and a computer body portion 3, each of which is shaped as a casing. One side edge of the input and display portion 2 and one side edge of the computer body portion 3 are coupled by a hinge. When the personal computer 1 is not in use, as shown in Figure 1, the input and display portion 2 and the computer body portion 3 are opposed to each other and closed. Therefore, the user can carry the personal computer 1 under one arm or the user can hold the personal computer in his hands in the condition in which the input and display portion 2 and the computer body portion 3 are closed. Upon use, as shown in Figure 3, the input and display portion 2 and the computer body portion 3 are opened through an angle of substantially 180 degrees, and the user can operate the personal computer 1 on a disc or supported on the palm of one hand in the condition in which the input and display portion 2 is facing upwardly.

A liquid crystal tablet panel 5 is built into the upper surface of a casing 4 of the input and display portion 2, i.e., a surface 4 a facing upwards when the input and display portion 2 is opened so that it occupies almost all the area of the upper surface 4 a . Thus, when the user inputs character information by using an input pen 6 or when the user specifies icons, the necessary display is made on the liquid crystal tablet panel 5. The liquid crystal tablet panel 5 is formed by bonding, for example, a transparent input tablet on a liquid crystal display panel, though this is not shown.

Operation buttons 7 are provided along the right side of the liquid crystal tablet panel 5 in the upper surface 4 a of the casing 4.

A pen accommodating recess 9 extends longitudinally in the right to left direction and is formed in the upper surface of a casing 8 of the computer body portion 3, namely, the front side of a surface 8 a which faces upwards when the computer body portion 3 is open adjacent the input and display portion 2. The input pen 6 and a connection cord 10 therefore are accommodated in the pen accommodating recess 9.

A battery accommodating portion 11, a speaker 12, various operation buttons 13 and an operation dial 14 are provided in the upper surface of the computer body casing 8.

The input and display portion casing 4 incorporates therein a display circuit and an input circuit for the liquid crystal tablet panel 5 and the computer body casing 8 incorporates therein a computing control section such as a central processing unit (i.e., CPU), a storage section such as a memory for the personal computer 1 and various kinds of interfaces.

Fundamental arrangements of the casings 4 and 8 will be described next but parts or portions formed on and detachably attached to the casings 4 and 8 will be described at a later stage.

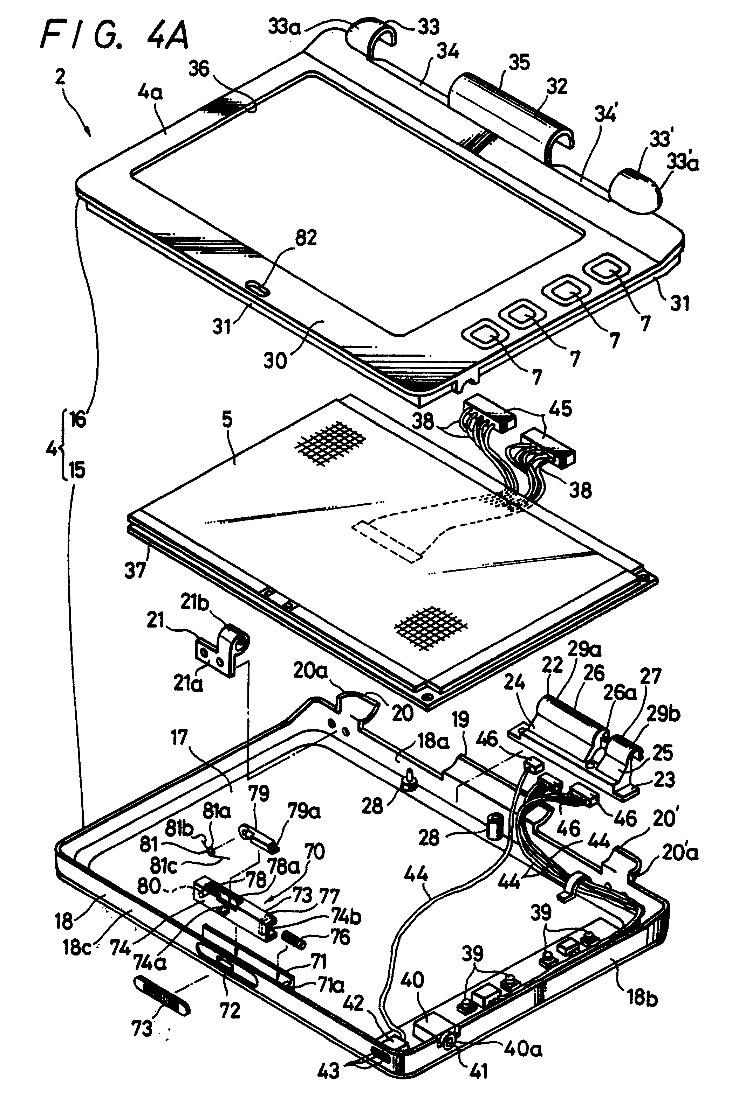

As illustrated in Figure 4A, the input and display portion casing 4 is formed of a lower half 15 and an upper half 16.

The lower half 15 is formed by a bottom plate 17 and a peripheral wall 18. The bottom plate 17 is planar and rectangular which is elongate in the lateral direction, and the peripheral wall 18 is erected from the peripheral edge of the bottom plate 17, whereby the lower part 15 is formed as a shallow dish shape.

A cylinder element 19 is unitarily formed with the peripheral wall 18 and is shaped as a cylinder of about one quarter of a circle protruding to the opposite side from the central portion of the upper edge of an opposing side portion 18 a of the peripheral wall 18 and curved upwardly in the end portions thereof.

Further, receiving cylinder elements 20 and 20' protrude from the upper edge of the opposite side portion 18 a of the peripheral wall 18 at positions near the left and right ends. The receiving cylinder elements 20 and 20' are cylindrical at portions thereof corresponding to about one quarter of a circle, protrude toward the opposite side and are curved upwardly in the end portions thereof. Cover portions 20 a and 20'a are unitarily formed with the outer end portions of the receiving cylinder elements 20 and 20', i.e., the left end portion of the left receiving cylinder element 20 and the right end portion of the right receiving cylinder element 20'.

Bearing members 21 and 21' are respectively formed of support members 21 a and 21´a shaped as substantially L-shaped plates and short cylindrical bearing portions 21 b and 21´b connected to the support members 21 a and 21´a with a displacement toward the upper ends of the support members 21 a and 21´a . The axial directions of the bearing portions 21´b and 21´b extend in the left to right direction.

The supporting members 21 a and 21´a are secured to the inside of the opposite side portion 18 a of the peripheral wall 18, whereby the bearing portions 21 b and 21´b are mounted on the receiving cylinder elements 20 and 20´, respectively.

A cylinder element member 22 is composed of an attaching member 23 which is shaped as a plate extending in the left to right direction, supporting members 24 and 25 erected from the attaching member 23 and cylinder element portions 26 and 27 elongate from the upper ends of the supporting members 24 and 25. The cylinder element portions 26 and 27 protrude to the other side of the supporting members 24 and 25, and are shaped as semicylinders whose axial directions extend in the left to right direction and whose concave portions extend downwardly. Closing walls 26 a and 27 a are formed on the opposing ends of the cylinder element portions 26 and 27.

The attaching member 23 is secured to mounts 28 erected from the bottom plate 17, whereby the cylinder element portions 26 and 27 are mounted on the cylinder element 19. Thus, the lower sides of the cylinder element portions 26 and 27 are substantially covered by the cylinder element 19, thereby forming cylinder portions 29 a and 29 b of which inner ends are closed and the left and right ends are open.

The upper half 16 comprises a top plate 30 which is shaped as a planar rectangle and engaging walls 31 protruding downwardly and spaced slightly inwardly of the front edge and the left and right side edges of the top plate 30.

A cylinder element 32 protrudes upwardly from the central portion of the rear side edge of the top plate portion 30. This cylinder element 32 also protrudes to the other side of the top plate 30. The cylinder element 32 is substantially a semi-cylinder, in which the axial direction thereof extends in the left to right direction and the concave portion thereof faces downwardly.

Receiving cylinder elements 33 and 33´ protrude upwardly from left and right ends of the other side edge of the top plate 30. The receiving cylinder elements 33 and 33´ also protrude to the other side of the top plate 30. The receiving cylinder elements 33 and 33´ are each substantially a semi-cylinder, in which the axial direction thereof extends in the left to right direction and the concave portions thereof face downwardly. Cover portions 33 a and 33´a are respectively unitarily formed on the outer end portions of the receiving cylinder elements 33 and 33´, namely, the left end portion of the left receiving cylinder element 33 and the right end portion of the right receiving cylinder element 33´.

Receiving edges 34 and 34´ protrude from the rear side edge of the top plate 30, that is, two places between the cylinder element 32 and the receiving cylinder elements 33 and 33´ to the other side and in the lower direction. The upper surfaces of the receiving edges 34 and 34´ are each concave in the form of a partial cylinder.

The upper half 16 is placed on the lower half 15, and the engaging walls 31 of the upper half 16 engage the inside of the peripheral wall 18 of the lower half 15. Also, the peripheral wall 18 is engaged by the engaging walls 31 by an engaging device (not shown) and the lower half 15 and the upper half 16 are fastened together by suitable means such as screws (not shown), to form the casing 4.

The cylinder element 19 of the lower half 15 and the cylinder element 32 of the upper half 16 are abutted to form an outside cylinder portion 35 which encircles the cylinder element portions 26 and 27 of the cylinder element member 22.

A large window 36 is formed through the top plate 30. The liquid crystal tablet panel 5 is located within the casing 4 so as to fill the large window 36 from the inside. A printed circuit board 37 is located beneath the liquid crystal tablet panel 5 within the casing 4.

Cords 38 are led out from the printed circuit board 37, through the cylinder portion 29 a and to the outside of the casing 4 from the left end of the cylinder portion 29 a .

Operation switches 39 are located on the lower half 15 at positions corresponding to the operation buttons 7. A jack member 40 is provided on the right side of the lower half 15, and a jack 40 a of the jack member 40 is opposed to the outside from a hole 41 bored through the right side portion 18 b of the peripheral wall 18.

A microphone 42 is provided on the front right side of the lower half 15 and is opposed to the outside through small apertures 43 bored through the front right end portion of the left side 18 c of the peripheral wall 18.

Cords 44 are respectively led out from the operation switches 39, the jack member 40 and the microphone 42. The cords 44 are laid through the cylinder portion 29 b and are led out from the right end of the cylinder portion 29 b to the outside of the casing 4.

Connectors 45 are respectively connected to the free ends of the cords 38 and connectors 46 are connected to the free ends of the cords 44.

The computer body casing 8 is also formed of a lower half 47 and an upper half 48. The upper and lower relationship of the upper half 48 and the lower half 47 is an upper and lower relationship when the casings 4 and 8 are opened as shown in Figure 3. Further, the input and display portion 2 side is determined as the front side and the computer body portion 3 side is determined as the other side or rear side.

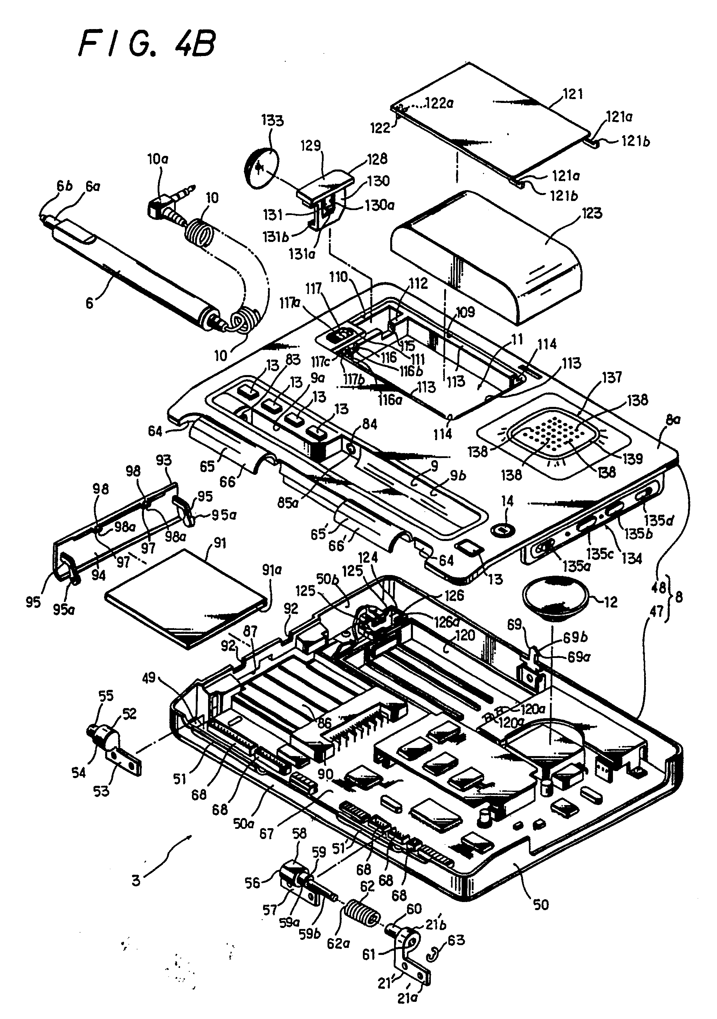

The lower half 47 comprises a bottom plate 49 which is shaped as an oblong as seen in planar view and a peripheral wall 50 erected from the peripheral edge of the bottom plate 49, as shown in Figure 4B.

Cylinder elements 51 and 51′ unitarily protrude forwards from positions between the central portion of a front side portion 50 a of the peripheral wall 50 and two side ends. Each of the cylinder elements 50 and 50′ is curved upwardly at its end portion to form a partial cylinder which corresponds to about one quarter of a circle.

A shaft member 52 comprises a plate-shaped rectangular attaching portion 53 extending in the left to right direction, a cylindrical supporting portion 54 protruding upwardly from the upper end of the left end portion of the attaching portion 53 and which also protrudes in the forward direction and a columnar shaft portion 55 protruding from the left end face of the supporting portion 54. The axial directions of the supporting portion 54 and the shaft portion 55 extend in the left to right direction, and the shaft portion 55 is smaller in diameter than the supporting portion 54.

The attaching portion 53 of the shaft member 52 is secured to the inside of the front side 50 a of the peripheral wall 50, whereby the supporting portion 54 is located on the left end portion of the above-described cylinder element 51 and the shaft portion 55 protrudes leftwards from the left end of the cylinder element 51. The shaft portion 55 is rotatably engaged with the bearing portion 21 b of the input and display portion casing 4, whereby the left-hand hinge coupling is realized.

A right bearing member 56 comprises a plate-shaped attaching member 57 and a supporting portion 58 which protrudes not only from the upper end of the attaching member 57 in the upper direction but also towards the front direction. A metal shaft member 59 is shaped as a short column and comprises a friction shaft 59 a secured to the supporting portion 58 so as to protrude from the right end face and a rotary shaft 59 b protruding from the middle portion of the right end face of the friction shaft 59 a towards the right. The diameter of the rotary shaft 59 b is smaller than that of the friction shaft 59 a .

The attaching portion 57 is secured to the inside of the front side portion 50 a of the periph-

eral wall portion 50, whereby the supporting portion 58 is held on the right end portion of the cylinder element 51′ and the shaft member 59 protrudes from the right end of the cylinder element 51′ towards the right.

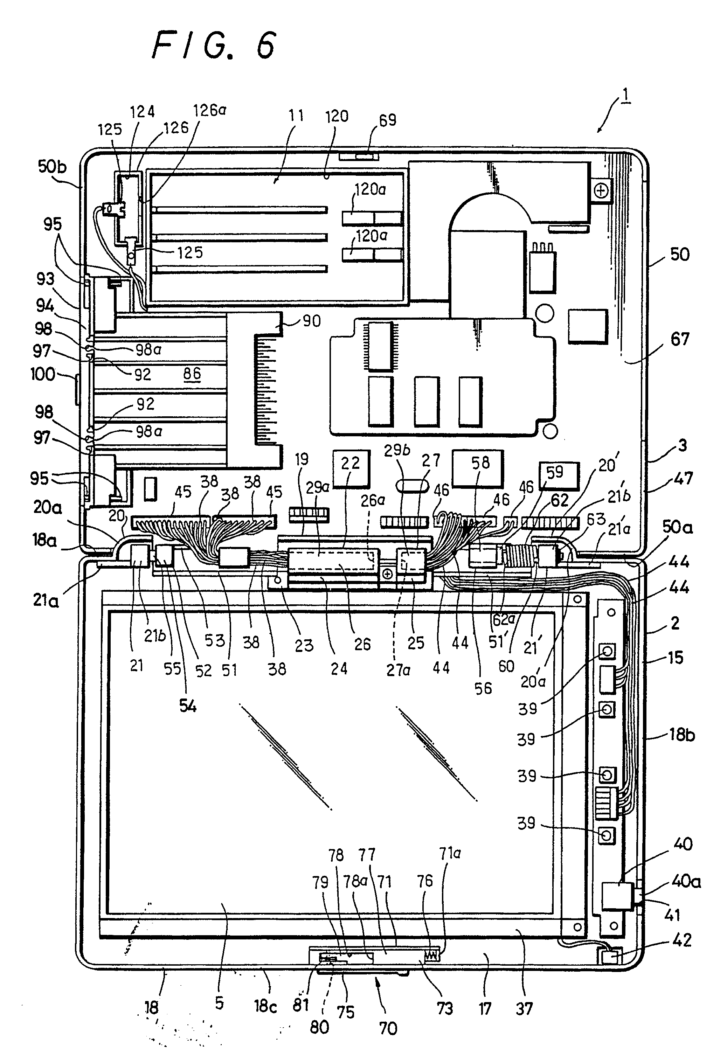

A cylinder member 60 protrudes from the left end face of the bearing portion 21′b provided in the input and display portion 2 (see Figure 6). A bearing aperture 61 is bored through the middle of the cylinder member 60 and the bearing portion 21′b . A coil spring 62 is longer than the cylinder member 60, inserted into the cylinder member 60 from the outside and is secured to the cylinder member 60 by some suitable means such as a bonding agent. A left end portion 62 a of the coil spring 62 protrudes to the left from the left end of the cylinder member 60.

The rotary shaft 59 b mounted on the computer body casing 8 is rotatably inserted into the bearing aperture 61 from the left and the friction shaft 59 a is inserted into the left end portion 62 a of the coil spring 62.

A circlip 63 shaped substantially as a letter E is engaged with the end portion protruding from the left end of the bearing portion 21′b of the rotary shaft 59 b , thereby preventing the rotary shaft 59 b from being disengaged from the bearing aperture 61.

The right-hand sides of the casings 4 and 8 are coupled in a hinge-coupling fashion as described above.

The outer diameter of the friction shaft 59 a is equal to or slightly larger than the inner diameter of the coil spring 62 so that a friction force acts between the friction shaft 59 a and the coil spring 62. Thus, when the shaft member 59 is rotated in the direction in which it extends the diameter of the coil spring 62, i.e., in the forward direction by the above-described friction force, a small resistance force is presented. However, when the shaft member 59 is rotated in the direction in which it reduces the diameter of the coil spring 62, i.e. , in the reverse direction, a large resistance force is applied therebetween. In this embodiment, the reverse direction means the direction in which the input and display portion 2 and the body portion 3 are moving apart, whereas the forward direction means the direction in which they move together. The input and display portion 2 and the body portion 3 can be opened up to 180 degrees. If the personal computer 1 is used in the condition that the input and display portion 2 and the body portion 3 are open to a desired angle ranging from 90 degrees to 180 degrees, then the body portion 3 can be prevented from being opened further by its own weight.

The upper half 48 is shaped substantially as an oblong when viewed from the top, and shallow recesses 64 are formed on the upper half 48 at the portions excepting the left and right two end portions of the front edge.

Semi-cylinder-shaped elements 65 and 65′ protrude from the front side of the upper part 48 at positions near the left and right end portions of the recesses 64. The axial directions of the cylinder elements 65 and 65′ extend in the left to right direction, and concave portions thereof face downwardly.

Thus, when the lower half 47 and the upper half 48 are coupled together, the cylinder elements 51, 51′ of the lower half 47 and the cylinder elements 65, 65′ of the upper half 48 form cylindrical portions 66, 66′. The cylindrical portions 66 and 66′ communicate at their insides with the inside of the casing 8.

Accordingly, when the casings 4 and 8 are coupled in a hinge-coupling fashion, the cylindrical portion 66 of the casing 8 is located between the cylindrical portion 35 of the casing 4 and the receiving cylinder elements 20, 33, while the cylindrical portion 66′ is located between the cylindrical portion 35 and the receiving cylinder elements 20′ and 33′. The cords 38 are led out from the left end of the cylindrical portion 29 a , laid into the casing 8 via the cylindrical portion 66. The cords 44 are led out from the right end of the cylindrical portion 29 b and laid into the casing 8 via the cylindrical portion 66′.

A printed circuit board 67 is provided within the casing 8, and the above-mentioned connectors 45 and 46 are respectively connected to connectors 68 provided on this printed circuit board 67 as shown in Figure 6.

A locking mechanism to lock the input and display portion 2 and the body portion 3 in the closed condition will be described next.

As shown in Figure 4B, a hook member 69 protrudes upwardly from the central portion of the opposing end edge of the casing 8. A tang 69 a protrudes from the upper end of the hook member 69 in the right direction and the right upper edge of the tang 69 a is formed as an inclined edge 69 b which slopes downwardly to the right.

Referring to Figure 4A, a locking portion 70 is provided on the casing 4 detachably to lock the hook member 69.

A guide wall 71 is upstanding from the bottom plate 17 so as to oppose the central portion in the left to right direction of the front peripheral wall 18 c of the lower half 15 of the casing in with a small spacing therebetween. A supporting wall 71 a protrudes from the right end of the guide wall 71 toward the front peripheral wall 18 c .

A slot 72 is formed through the front side peripheral wall portion 18 c of the casing 4 at the position substantially opposite the middle portion of the guide wall 71. A sliding member 73 which is elongate in the left to right direction is shaped as a letter U which is open in the rearward direction from a transversal cross-sectional view standpoint.

A guided protrusion 74 a protrudes in the forward direction from a front member 74 of the sliding member 73 at substantially the middle position in the left and right direction. The sliding member 73 is located between the guide wall 71 and the front peripheral wall 18 c so as to become freely slidable in the left to right direction. The guided protrusion 74a is slidably inserted into the slot 72 formed through the front side peripheral wall portion 18 c .

A handle 75 is attached to the guided protrusion 74 a at its portion which protrudes forwards from the front peripheral wall 18 c through the slot 72. The user can slide the sliding member 73 by the handle 75. The slidable range of the sliding member 73 is between the positions in which the guided protrusion 74 a comes in contact with the left end and the right end of the slot 72.

A pressure receiving member 74 b protrudes rearwards from the rear wall of the front member 74 at the position near the right side from substantially the middle in the left to right direction. A compression coil spring 76 is provided between the pressure receiving member 74 b and the supporting wall 71 a , whereby the sliding member 73 is spring-biased in the leftward direction. When the sliding member 73 is not acted on so as to slide in the right-hand direction, the sliding member 73 is located at the left end position of the above-mentioned slidable range.

An opening 78, which is elongate in the left to right direction, is formed through the left half portion of an upper member 77 of the sliding member 73, and of the opening edges of the opening 78, a right end edge 78 a is used as an engaging edge.

A closing plate 79 planar in shape closes the opening 78 substantially completely. Under the condition that the closing plate 79 closes the opening 78, the closing plate 79 is rctatably supported by a supporting shaft 80 whose left end portion protrudes rearwards from the front member 74 of the sliding member 73.

A torsion spring 81 is provided having a coil spring portion 81 a engaged with the supporting shaft 80 from the outside and one arm 81 b is resiliently brought into contact with the lower surface of the left end portion of the upper member 77 of the sliding member 73. Its other arm 81 c is resiliently brought into contact with the lower surface of the closing plate 79. Thus, a rotational force is applied to the closing plate 79 so that the rotational end, i.e. , the right end thereof is moved upwardly.

A stopper member 79 a protrudes rightwardly

from the lower surface of the right end portion of the closing plate 79. The stopper member 79 a is engaged with the lower surface of the engaging edge 78 a , whereby the closing plate 79 is prevented from being rotated any more. Under this condition, the closing plate 79 closes the opening 78 substantially completely.

An oblong insertion aperture 82 is formed through the front edge of the top plate portion 30 of the upper half 16 of the input and display portion casing 4 at substantially the middle portion in the left to right direction. This oblong insertion aperture 82 is formed over the portion corresponding to the part between the right end portion of the closing plate 79 of the locking portion 70 and the engaging edge 78 a .

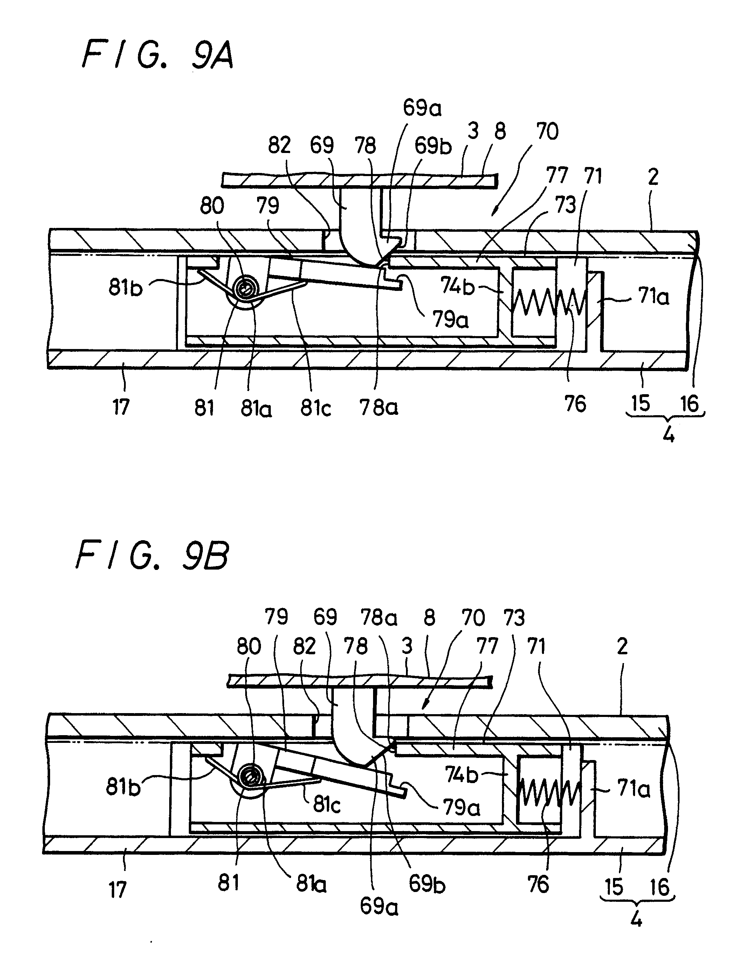

Thus, when the input and display portion 2 and the computer body portion 3 are closed, the hook member 69 provided on the computer body portion 3 side is inserted into the casing 4 through the insertion aperture 82 of the input and display portion 2 so that a portion near the left end of the inclined edge 69 b of the hook member is brought into contact with the engaging edge 78 a of the locking portion 70 (see Figure 9A). If the hook member 69 is further advanced into the casing in under this condition, then the engaging edge 78 a is pushed in the lower right direction by the inclined edge 69 b , whereby the sliding member 73 is moved to the right against the spring force of the compression coil spring 76 (see Figure 9B). Therefore, the hook member 69 can be further inserted into the casing 4, and the closing plate 79 is pushed by the lower end of the hook member 69, whereby the closing plate 79 is rotated downwardly against the spring force of the torsion spring 81.

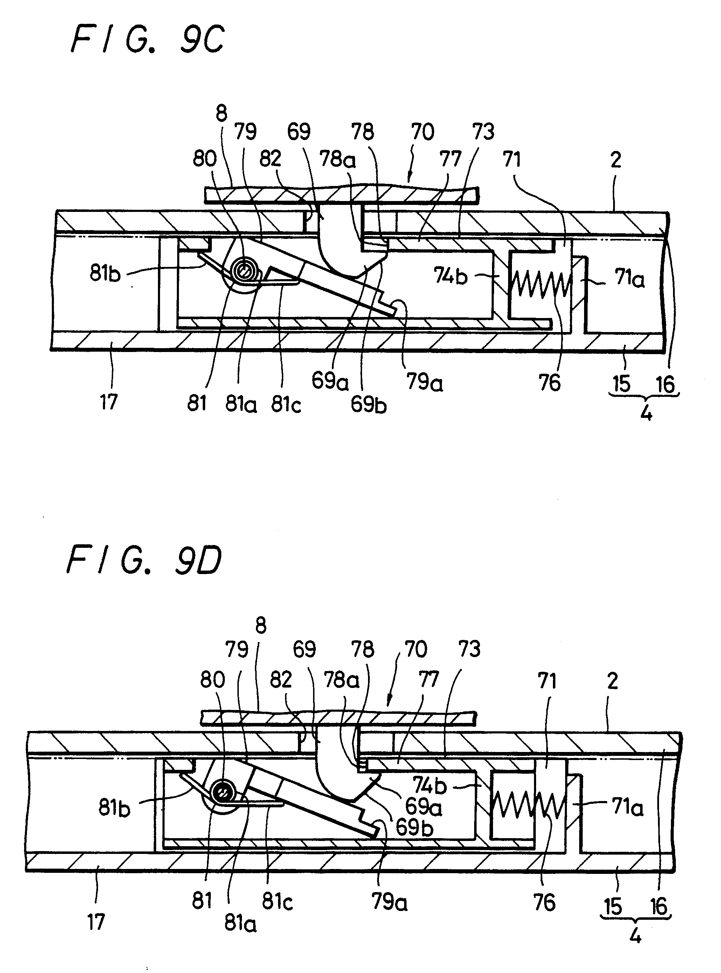

If the tang 69 a of the hook member 69 reaches a position lower than the upper member 77 of the sliding member 73 (see Figure 9C), the pushing force for pushing the engaging edge 78 a to the right is removed so that the sliding member 73 is moved to the left by the spring force of the compression coil spring 76, thereby causing the engaging edge 78 a to be placed above the tang 69 a . Thus, the tang 69 a is in engagement with the engaging edge 78 a (see Figure 9D) and the input and display portion 2 and the computer body portion 3 are locked in the closed condition so that, so long as the engagement between the tang 69 a and the engaging edge 78 a is not released, the input and display portion 2 and the computer body portion 3 can be prevented from being opened.

When the input and display portion 2 and the computer body portion 3 are released from their locked condition, the lever 75 located in front of the casing 4 is moved to the right. Thus, the sliding member 73 is moved to the right against the spring force of the compression coil spring 76, whereby

the engaging edge 78 a escapes to the right from above the tang 69 a of the hook member 69. Thus, they can be opened.

If the input and display portion 2 and the computer body portion 3 are opened, then the hook member 69, which keeps pushing the closing plate 79 downwardly, escapes in the upward direction, whereby the closing plate 79 is rotated upwardly by the spring force of the torsion spring 81, resulting in the aperture 78 being closed. Therefore, when the personal computer 1 is in use, the insertion aperture 82 cut in the front upper surface of the casing 4 is closed to make the personal computer 1 more attractive.

With reference to Figure 4B, the pen accommodating concave portion 9 which is elongate in the left to right direction is formed along the front edge of the upper half 48 of the computer body casing 8. In the pen accommodating recess 9, a right hand portion 9 b , which occupies about two thirds of the pen accommodating recess 9, is formed wide as compared with a left hand portion 9 a which occupies about one third of the pen accommodating recess 9. An insertion aperture 83 is bored through the left end inner surface of the narrow portion 9 a and an aperture 84 is bored through the rear inner surface of the wide portion 9 b at its left end portion. A jack 85 a of a jack member 85 secured to the inner surface of the upper part 48 is opposed within the recess 9 through the aperture 84.

Various kinds of input pens have been proposed as coordinates designating devices. In the illustrated embodiment the input pen 6 is of the electrostatic pressure-sensitive kind to designate coordinates on the liquid crystal tablet panel 5.

A tip 6 a of the input pen 6 is formed thin as compared with the rest of the input pen 6 and a contact portion 6 b is formed at the top of the tip 6 a of the input pen 6.

The connection cord 10 of the input pen 6 is wound into a spiral and led out from the rear end of the input pen 6. A plug 10 a is connected to the free end of the cord 10.

When the input pen 6 is in use, the plug 10 a is inserted into the jack 85 a While the plug 10 a is inserted into the jack 85 a , the input pen 6 and the connection cord 10 can be accommodated within the accommodating recess 9. More specifically, under the condition that the tip 6 a of the input pen 6 is inserted into the insertion aperture 83, the input pen 6 can be accommodated in the narrow portion 9 a and one end of the wide portion 9 b and the connection cord 10 can be accommodated in the other end of the wide portion 9 b as shown in Figure 3.

The plug 10 a can be inserted not only into the jack 85 a opposing within the recess 9 but also into

the jack 40 a on the right front side end of the input and display portion casing 4. This ensures that the user can select the more convenient jack. Alternatively, the jack into which the plug 10 a is inserted may be provided so as to oppose other portions of the casings 4 and 8 in addition to the jacks 40 a and 85 a .

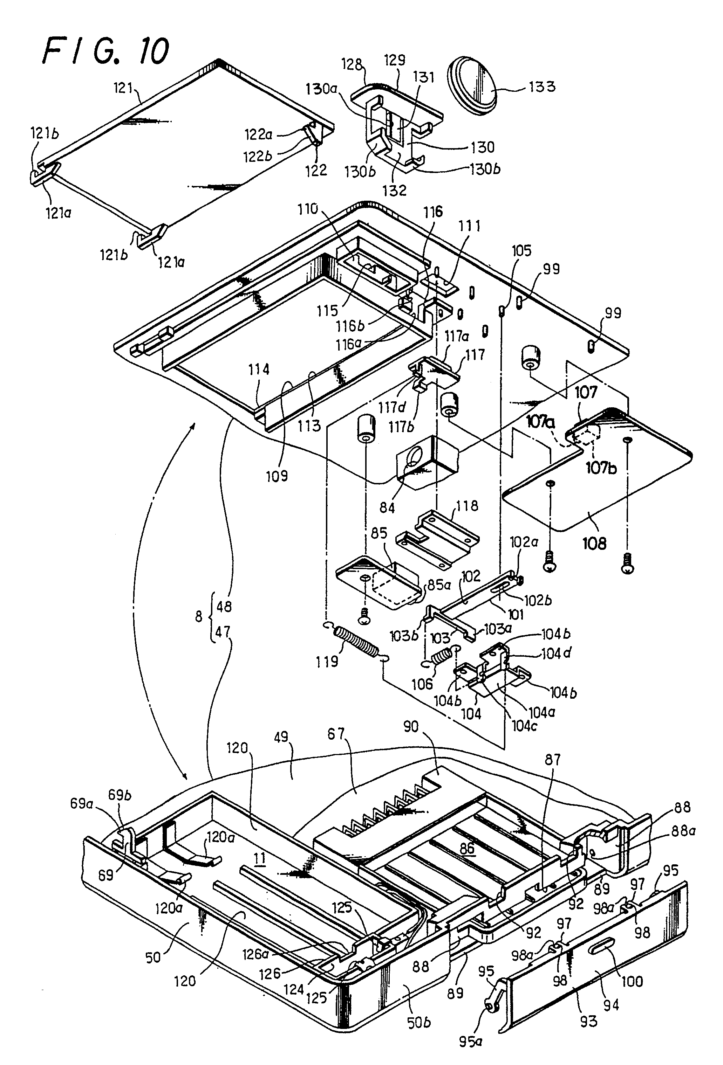

There is shown a memory card or IC card loading portion 86 into which a memory card or IC card, which will be described later, is loaded. A loading slot 87 extending in the front to rear direction, is formed through the peripheral wall 50 of the lower half 47 of the computer body casing 8 at the position near the upper edge of the left side portion 50 b . As shown in Figures 4B and 10, recess portions 88, extending substantially from the upper end to the lower end, are formed on the two side portions of the loading slot 87 in the left side peripheral portion 50 b . A shallow recess 89 is formed in the left side edge of the bottom plate portion 49 between the recess portions 88.

A card connector 90 is located within the casing 8 at a position opposite the loading slot 87. A connection end 91 a of the IC card 91 loaded from the loading slot 87 is connected to the card connector 90, thereby connecting the IC card 91 to a circuit (not shown).

Cutaway portions 92 are formed on the upper edge of the left side peripheral wall 50 b at positions near the two ends of the loading slot 87.

A lid 93 is made of a synthetic resin and this lid 93 comprises a main portion 94 which is shaped as a plate extending in the front to rear direction. A lower edge portion of the main portion 94 is slightly curved rightwardly.

Arm members 95 are shaped substantially to an inverted L-shape when seen from the front side. The arm members 95 unitarily protrude from the inner surface of the main portion 94, that is, at a position slightly higher than the middle in the upper and lower direction of the position near the inside from the front and rear ends of the right side surface of the main portion 94. Supporting protrusions 95 a protrude from the outer surfaces of the top portions of the arm members 95, i.e., at the front surface of the front arm member 95 and the rear surface of the rear arm member 95.

Receiving holes 88 a are respectively formed through the far side surfaces of the recess portions 88, that is, the deep lower end portions of the rear surface of the rear recess portion 88 and the front surface of the front recess portion 88.

The supporting protrusions 95 a of the arm members 95 are rotatably engaged with the receiving holes 88 a , respectively whereby the lid 93 is rotatable at the supporting point, that is, the engagement portion between the supporting protrusions 95 a and the receiving apertures 88 a there-

by to open or close the memory card loading slot 87.

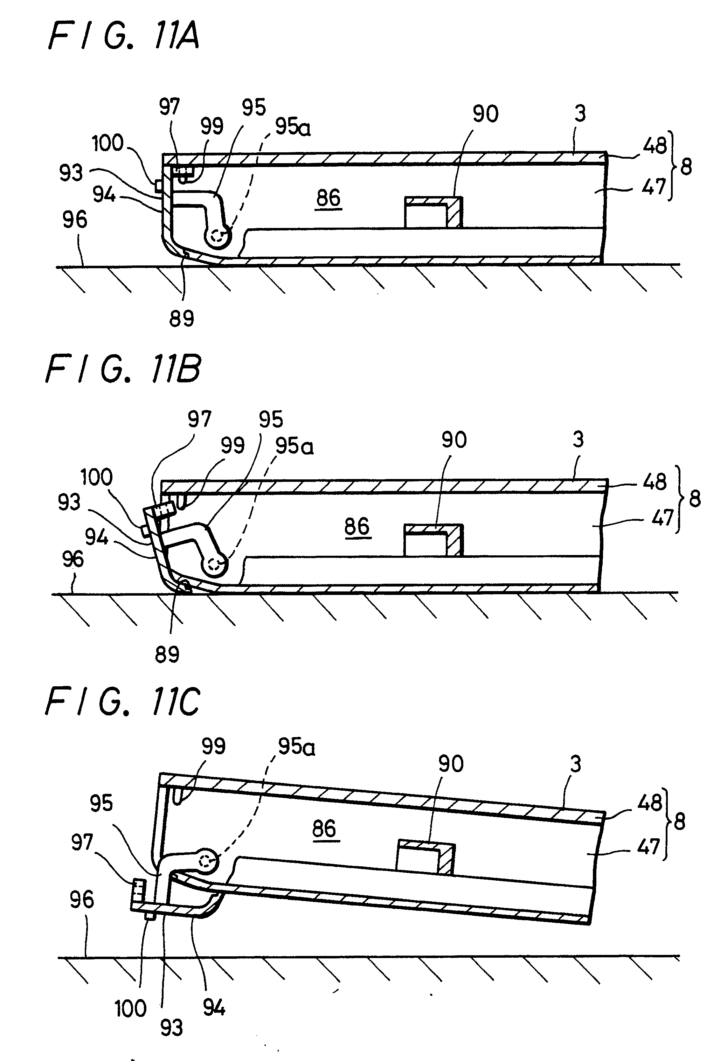

If the lid 93 is opened under the condition that the computer body portion 3 is mounted on a flat surface 96, when the lid 93 is opened very slightly, the lower end portion of the main portion 94 abuts against the above-mentioned flat surface 96 (see Figure 11B0 so that the lid 93 is inhibited from being opened any more. Accordingly, when the IC card 91 is to be exchanged, the computer body portion 3 should be lifted from the flat surface 96, so that the lid 93 can be fully opened, thus ensuring that the loading slot 87 can be fully opened (see Figure 11C).

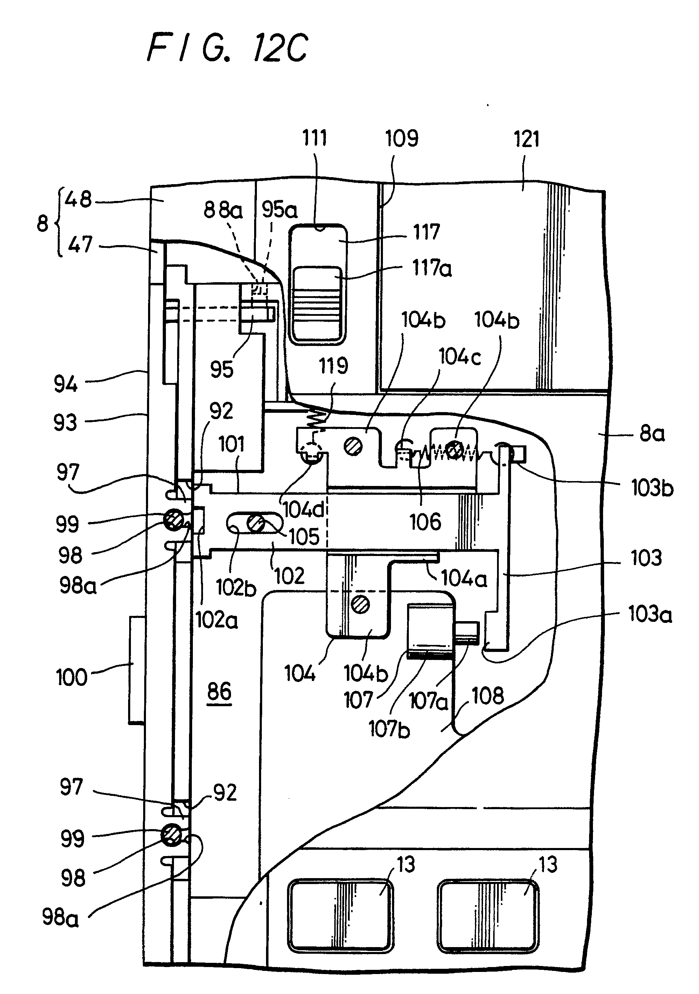

Engaging members 97 protrude on the inner surface of the main portion 94 of the lid 93 at positions along the upper edge in the separated state in the front to back direction. Opened engaging recesses 98 are respectively formed on the tops of the engaging members 97. Open ends 98 a of the engaging recesses 98 are reduced in width so that, when the lid 93 is closed, then the engaging members 97 are respectively placed within the cutaway portions 92 formed on the upper edge of the left peripheral wall portion 50 b (see Figure 12C).

Engaging pins 99 are provided on the left edge lower surface of the upper part 48 of the casing 8 so as to protrude into the cutaway portions 92, respectively.

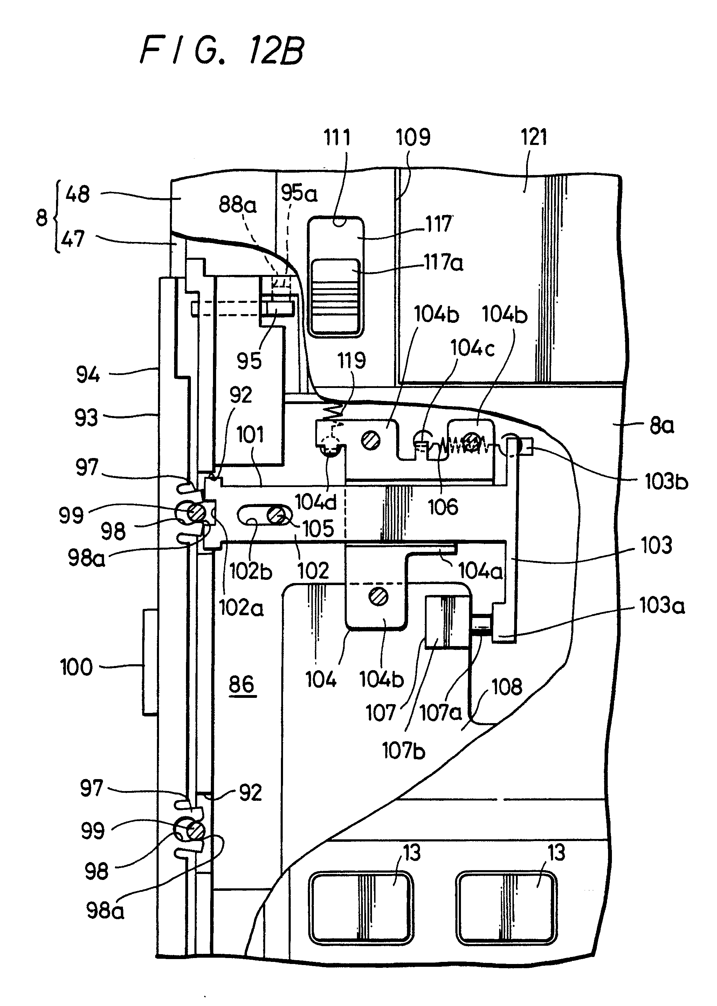

Thus, when the lid 93 is closed, the narrow portions 98 a of the engaging recesses 98 of the engaging members 97 are extended by flexibility of the material forming the narrow portions 98 a (see Figure 12B), whereby the engaging pins 99 are engaged with the engaging recesses 98 (see Figure 12C), whereby the lid 93 is stopped at its closed position in a click fashion.

A protruding strip guide 100 is formed on the main portion 94 of the lid 93 at a position near the upper end of its outer surface. When the lid 93 is opened, if the protruding strip guide 100 is pushed downwardly with fingers or fingertips on its upper surface, then a rotational force in the opening direction is applied to the lid 93 so that the narrow portions 98 a of the engaging recesses 98 of the engaging members 97 are extended by the engaging pins 99, whereby the engagement between the engaging recesses 98 and the engaging pins 99 is released.

A slide member 101 (Figure 10) is supported on the lower surface of the upper half 48 of the casing 8 so as to be slidable in the left to right direction. The slide member 101 is formed by synthetic resin moulding with a narrow plate-shaped main portion 102 extending in the left to right direction and an actuating portion 103 coupled to the right end portion of the main portion 102 in the front to rear direction.

A recess 102 a is formed at the right hand end of the main portion 102, and a rectangular opening 102 b extending in the left to right direction is formed through the main portion 102 at a position near the left hand end.

A front end portion 103 a of the actuating portion 103 serves as a pushing portion, and a spring hook member 103 b protrudes downwardly from the rear end of the actuating portion 103.

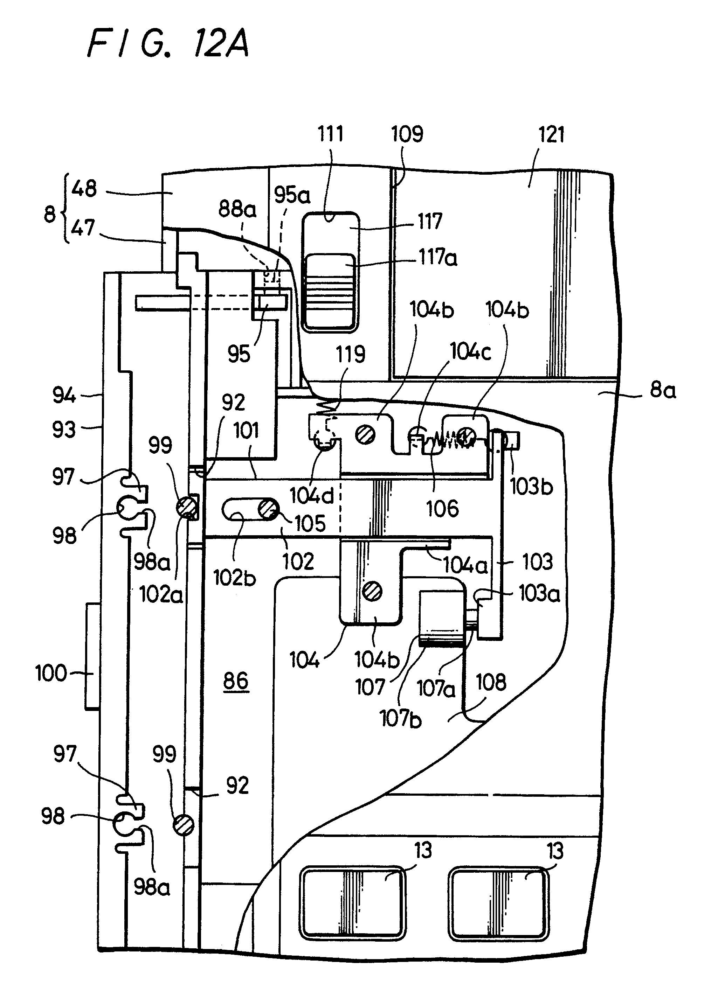

As shown in Figures 10 and 12A, a metal support fitting 104 is formed by forging together a guide portion 104 a which is shaped as an angular-groove extending in the left to right direction, attaching members 104 b , protruding in the lateral direction from the upper edge of the guide portion 104 a and a spring hook member 104 c protruding downwardly from the middle rear edge portion of the guide portion 104 a .

Support pins erected from the lower surface of the upper half 48 are respectively inserted into attaching apertures bored through the attaching members 104 b . Portions of the support pins protruding downward beyond the attaching apertures 104 b are caulked to secure the metal support fitting 104 to the lower surface of the upper half 48.

The main portion 102 of the slide member 101 is slidably supported by the guide portion 104 a of the metal support fitting 104, and a guide pin 105 protruding from the lower surface of the upper half 48 is slidably inserted into the rectangular opening 102 b of the main portion 102, whereby the slide member 101 is supported on the underside of the upper half 48 so as to be freely slidable in the left to right direction.

A tension coil spring 106 extends between the spring hook member 103 b of the slide member 101 and the spring hook member 104 c of the metal supporting fitting 104, whereby the slide member 101 is spring-biased so as to slide to the left.

During the period in which the slide member 101 is not applied with the spring-biasing force for moving the slide member 101 to the right, one (i.e., placed in the rear side) of the engaging pins 99 is engaged into the cutaway portion 102 a formed in the left end portion of the slide member 101 (see Figure 12A). When the lid 93 is closed, the left end face of the main portion 102 of the slide member 101 is pushed by the right end of the engaging member 97, whereby the slide member 101 is slightly moved to the right against the spring force of the tension coil spring 106 (see Figures 12B and 12C).

A switch 107 is supported on a printed circuit board 108 which is supported on the upper half 48. An operating member 107 a of the switch 107 protrudes from the right side wall of a switch casing 107 b and is opposed to the actuating portion 103 a of the slide member 101.

When the lid 93 is placed in position so as to close the loading slot 87, the slide member 101 is slightly moved to the right against the spring force of the tension coil spring 106 so that, although the actuating portion 103 a of the slide member 101 is placed close to the operating member 107 a of the switch 107 from the right side, the actuating portion 103 a is kept in a position such that it is inhibited from pushing the operating member 107 a (see Figure 12C).

When the cutaway portion 102 a of the slide member 101 is engaged with the engaging pin 99 (i.e. when the lid 93 is rotated towards the open position from the closed position), the operating portion 107 a of the switch 107 is pushed by the actuating portion 103 a of the slide member 101 so that the switch 107 is actuated to generate a power off signal (see Figures 12B and 12A).

If the power off signal is generated by the switch 107, data used in the personal computer 1 body is saved.

It takes a little time to save data, for example, about 2 seconds. If the user ejects the IC card 91 from the memory card loading portion 86 before the saving of data is finished or before the power switch is turned OFF, there is then the substantial risk that data in the IC card 91 will be destroyed. For this reason, when the personal computer 1 is in use, or under the condition that the input and display portion 2 and the computer body portion 3 are opened at 180 degrees and the personal computer 1 is placed on the flat surface 96, the lid 93 is inhibited from being opened until the IC card 91 is ejected from the memory card loading portion 86, which makes it possible to gain sufficient time to save the data. Therefore, it is possible to prevent the data in the IC card 91 from being destroyed by the user's inadvertent operation.

The battery accommodating portion 11 is formed at the rear left side portion of the computer body casing 8.

As shown in Figures 3 and 4B, an opening 109 is oblong and is formed in the rear left hand portion of the upper half 48. An opening 110 is formed adjacent to the left side of the opening portion 109, and is about three fifths of the opening 109 in width in the front to rear direction. A slide opening 111 is long in the front to rear direction and is formed at a position adjacent the front side of the opening 110.

A web 112 is provided to form a boundary portion between the opening 109, the opening 110 and the slide opening 111 and an upper surface of the web 112 is made slightly lower than the upper surface of the upper half 48.

Receiving edges 113 protrude from the upper half 48 at positions slightly lower than the opening surfaces of the openings 109 and 110. Upper surfaces of the receiving edges 113 are positioned in the same plane as that of the upper surface of the web 112.

Recesses 114 are formed at the right hand end portions of the receiving edges 113 at the front and rear edges of the opening 109.

A recess 115 is formed in the upper surface of the web 112 at a substantially intermediate position in the front to rear direction between the openings 109 and 110. Further, a recess 116 is formed in the front end of the web 112 such that a large front side 116 a thereof is deep while its rear side 116 b is shallow.

As shown in Figures 4B and 10, a slide member 117 is supported between the underside of the upper half 48 and a supporting member 118 secured to the underside of the upper half 48 so as to become freely slidable in the front to rear direction. A knob 117 a protrudes from the upper surface of the slide member 117 and is slidably positioned within the slide opening 111. A lock member 117 b protrudes rightwardly from the right side surface of the slide member 117. The lock member 117 b is located within the upper portion of the recess 116 formed in the web 112, and a front end upper surface of the lock member 117 b is formed with an inclined surface 117 c which is tapered in the forward direction.

A spring hook member 117 d protrudes downwardly from the rear end portion of the slide member 117. A tension coil spring 119 extends between the spring hook member 117d and a spring hook member 104 d formed on the metal support fitting 104, and the tension coil spring 119 spring-biases the slide member 117 by the spring force thereof so that the slide member 117 may be moved in the forward direction. Accordingly, the locking member 117 b of the slide member 117 is normally located on the upper portion of the front side portion 116 a of the recess 116.

A battery accommodating recess 120 is formed in the lower part 47 of the casing 8 at a position corresponding to the opening 109, and terminals 120 a are provided in the battery accommodating recess 120.

A lid 121 is an oblong plate and so sized that it can just be fitted in the opening 109.

A pair of engaging members 121 a protrude downwardly from the front and rear end portions of the right hand end of the underside of the lid 121. Each of these engaging members 121 a is shaped as a letter U which is open upwardly as seen from the top thereof. Also, right end upper surfaces 121 b of the engaging members 121 a are located at a position slightly higher than the lower surface of the lid 121.

An engaging member 122 protrudes from the left hand end of the underside of the lid 121 at a position near the front end thereof. An engaging tang 122 a protrudes rearwardly from the lower end portion of the engaging member 122, and a lower edge 122 b of the engaging tang 122 a is shaped as an inclined edge whose rear side rises.

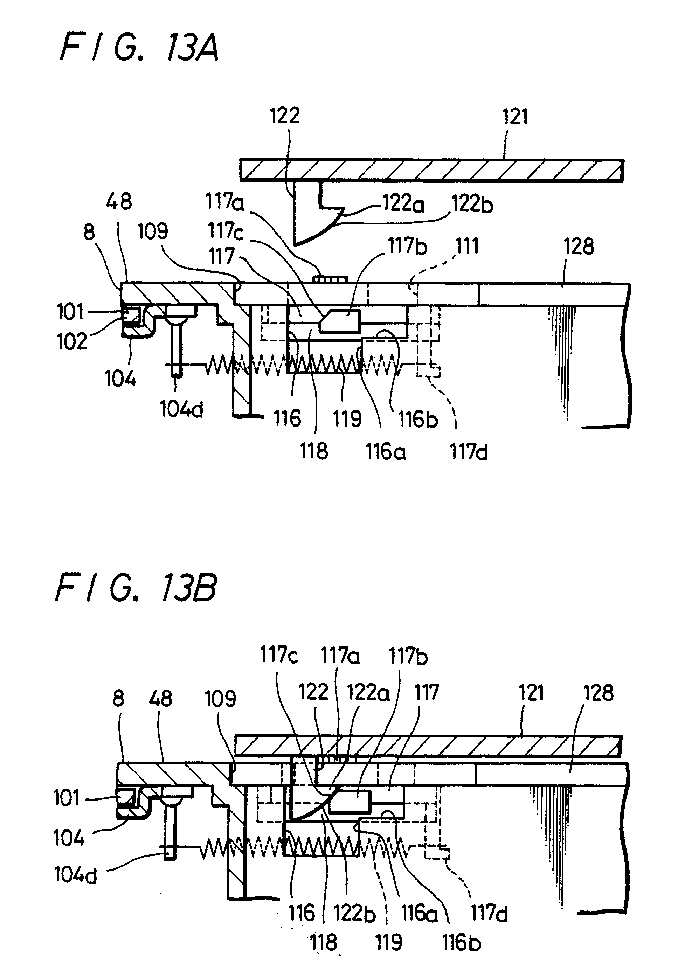

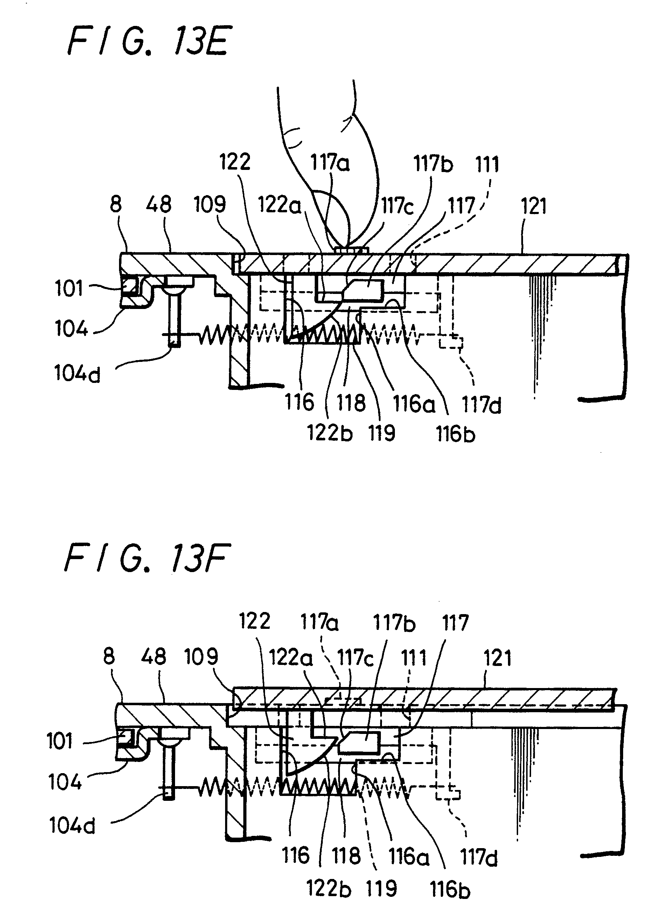

Under the condition that the lid 121 substantially covers the opening 109 and the lid 121 is inclined in the lower right direction, the engaging members 121 a can be inserted into the casing 8 through the recesses 114 formed on the right end portions of the receiving edges 113 placed at the front and rear edges of the opening 109, whereby the right hand edge of the lid 121 comes into contact with the right receiving edge 113 (see Figure 14A). In this state, the lid 121 can be rotated such that the left hand end of the lid 121 is moved downwardly about a rotational supporting point which is the contact position between the right hand edge of the lid 121 and the right receiving edge 113. Then, the inclined edge 122 b of the engaging lever 122 of the lid 121 comes into contact with the inclined surface 117 c of the locking member 117 b located above the front recess 116 a (see Figure 13B).

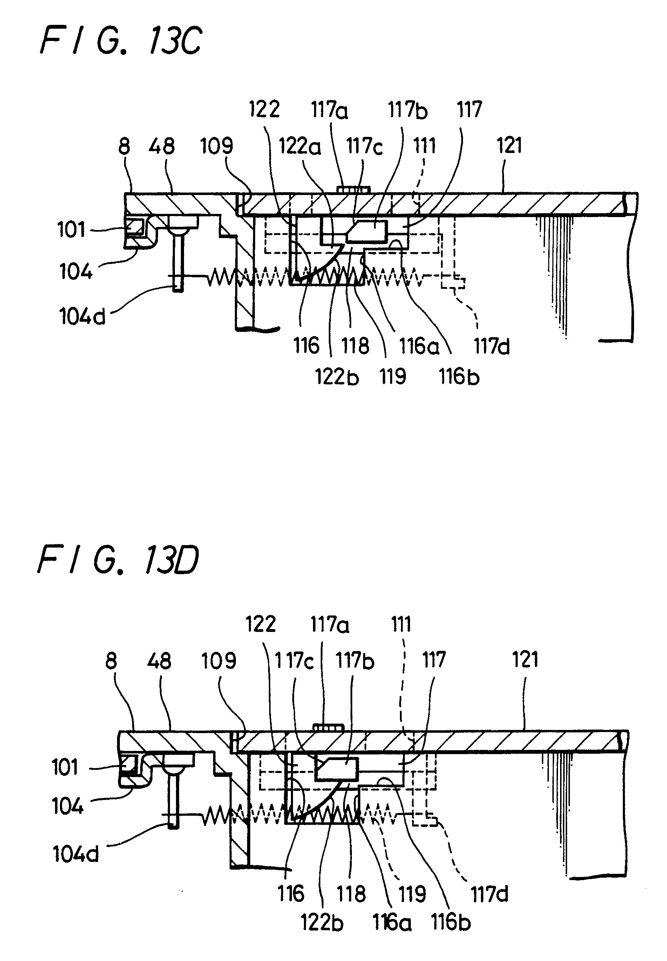

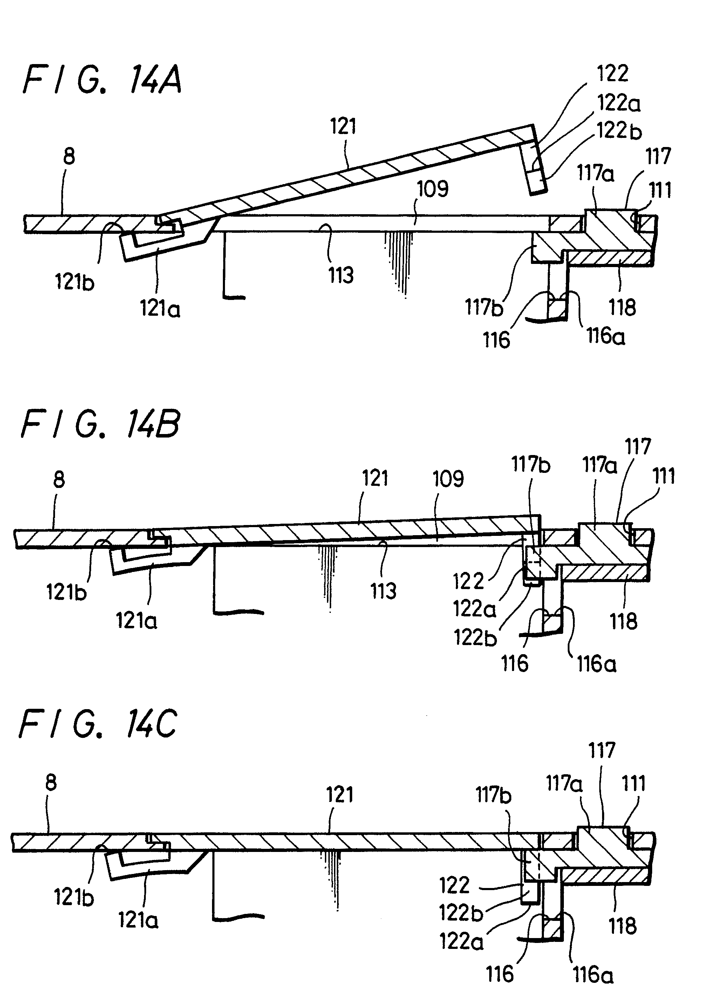

If the lid 121 is further rotated downwardly from this state, the inclined edge 122 b of the engaging member 122 pushes the inclined surface 117 c of the locking member 117 b in the rear lower direction so that the slide member 117 applied with this pushing force through the locking member 117 b is moved rearwardly against the spring force of the tension coil spring 119. Thus, the lid 121 can be rotated so that the peripheral edge portion thereof is brought into contact with the respective receiving edges 113 and the upper surface of the web 112. Consequently, the opening 109 is covered with the lid 121 (see Figure 13C). Under this condition, the upper surfaces 121 b of the right hand end portions of the engaging members 121 a of the lid 121 are placed at a position slightly higher than the lower surface of the lid 121 so that the upper surfaces 121 b come into contact with the underside of the upper half 48, thereby flexing the lid 121 slightly downwardly (see Figures 14B and 14C). Therefore, the engaging members 121 a accumulate forces, by which the left hand end of the lid 121 is slightly moved upwardly. In this state, the engaging tang 122 a is located lower than the locking member 117 b (see Figure 13C) so that the slide member 117 is moved forwardly and returned to the original position by the spring force of the tension coil spring 119 (see Figure 13D), whereby the locking member 117 b is placed above the engaging tang 122 a , and the lid 121 is locked at a position in which the upper opening 109 of the battery accommodating recess 120 is closed.

When the lid 121 is opened, the knob 117 a must be moved rearwardly. Then, the slide member 117 is moved rearwardly against the spring force of the tension coil spring 119, thereby moving its locking member 117 b from the upper portion of the front side portion 116 a of the recess 116 to its rear side 116b. Thus, the engaging tang 122 a of the lid 121 is released from engagement so that the left hand end portion of the lid 121 is slightly lifted by the forces accumulated in the engaging members 121 a . Accordingly, the lid 121 is rotated upwardly by the lifted left end portion of the lid 121 and the engaging members 121 a are pulled out from the recesses 114 to the outside of the casing 8.

With reference to Figures 4B and 10, a battery 123 is a rechargeable type battery and is detachably accommodated within the battery accommodating recess 120.

An accommodating recess 124 is rectangular as seen in plan view and is formed adjacent to the left hand side of the battery accommodating recess 120.

Terminals 125 are provided within the accommodating recess 124, and a recess 126 a of small height is formed in the central portion of a peripheral wall 126 forming the accommodating recess 124 at its front to back direction of the right side upper edge of the peripheral wall. When the lower half 47 and the upper half 48 are coupled to form the casing 8, the recess 126 a and the right side surface lower end of the web 112 form an engaging aperture 127.

A so-called button type battery holder 128 is moulded of synthetic resin. The button type battery holder 128 comprises an upper wall plate 129 and a supporting plate 130 protruding downwardly from the upper wall plate 129.

The upper wall plate 129 is a plate of a size such that it can be fitted into the opening 110. The supporting plate 130 protrudes downwardly from the upper wall plate 129 at a position offset to the right side of the lower surface of the upper wall plate 129.

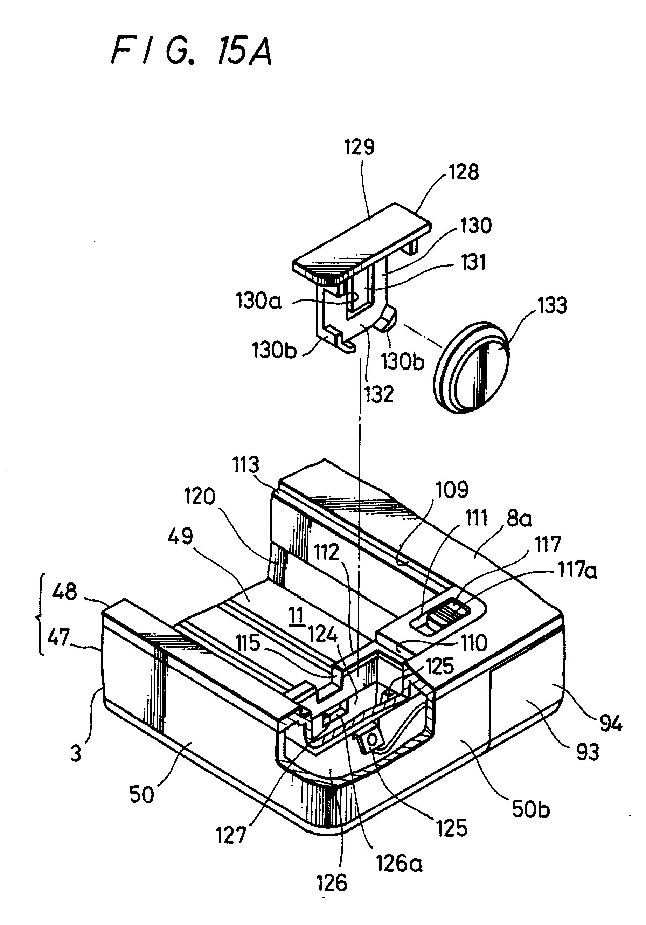

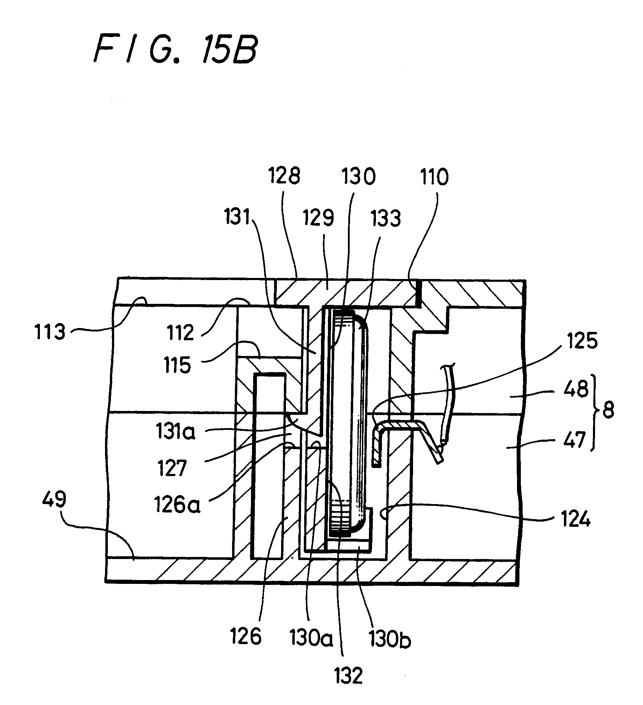

As shown in, for example, Figure 15A, a slot 130 a is shaped as a letter U which opens upwardly as seen from the lateral direction and is formed through the supporting plate 130 in a range from the upper end to a little lower than the middle portion of the supporting plate 130. The portion defined by the slot 130 a forms an engaging tongue 131. The engaging tongue 131 has formed at a right side surface lower end portion thereof a protruding engaging tang 131 a (see Figure 15B).

The supporting plate 130 has formed on a right side surface lower end portion thereof a pair of support protrusions 130 b . Of the left side surface of the supporting plate 130, particularly, in a battery supporting portion 132 surrounded by the supporting protrusions 130 b and the upper surface plate 129, there is supported a button type battery 133 such as a lithium battery.

Under the condition that the button type battery 133 is held in the battery supporting portion 132 of the button type battery holder 128, the supporting plate 130 is inserted into the accommodating recess 124 through the opening 110. When the supporting plate 130 is inserted into the accommodating recess 124, the button type battery 133 comes in contact with the terminals 125 provided within the accommodating recess 124. Also, the upper plate 129 is located on the receiving edge 113 and the web 112 under the condition that it closes the opening 110. Further, the engaging tang 131 a is engaged with the engaging aperture 127 thereby to lock the supporting plate 130 so that the supporting plate 130 will not fall out of the accommodating recess 124. The button type battery 133 is utilized as a power source for backing up a memory or operating a clock.

If the button type battery holder 128 is released from the casing 8, in the condition that the lid 121 is detached from the casing 8, the upper surface plate 129 can be lifted upwards by a finger nail inserted between the right side end face of the upper plate 129 and the upper surface of the upper plate 129. Accordingly, under the condition that the lid 121 is inserted into the casing 8, the button type battery holder 128 cannot be released from the casing 8.

As shown in, from example Figure 4B, a voice memory operation portion 134 is formed on the right side surface of the casing 8, and a recording operation button 135 a , a playback operation button 135 b , a stop operation button 135 c and a volume adjusting knob 135 d are provided in the voice memory operation portion 134.

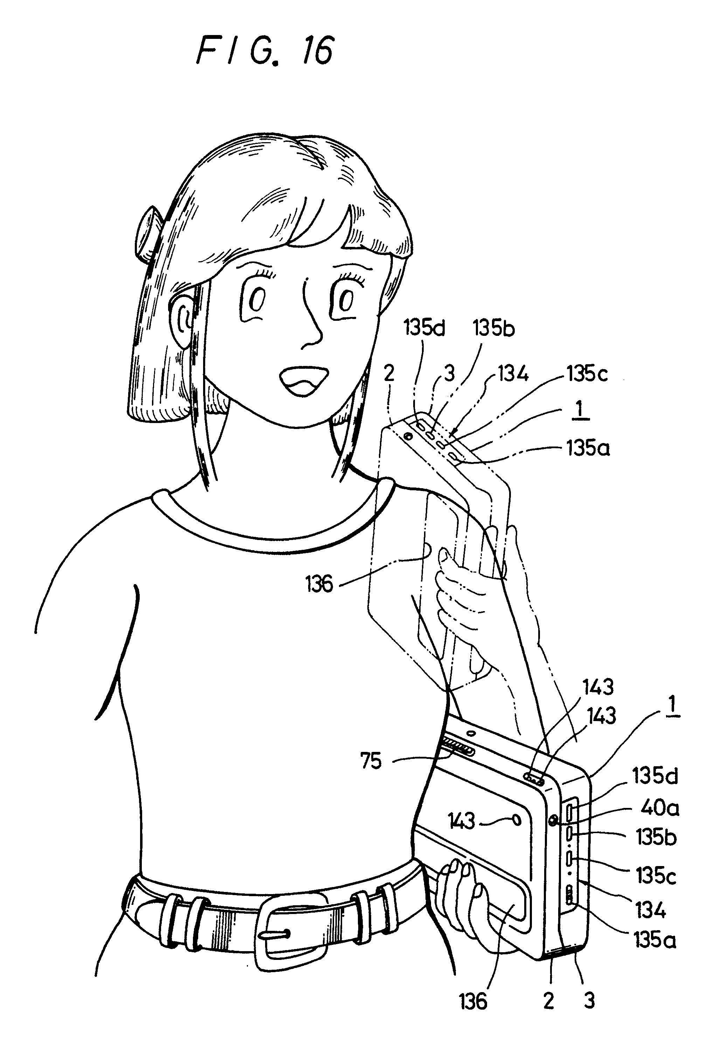

As shown in Figure 1, an elongate recess 136 of small depth extends along the rear edge of the under surface of the lower part 15 of the input and display casing 4 in the right to left direction. In the condition that the input and display portion 2 and the computer body portion 3 are closed, if the user holds this personal computer 1 in one hand, as shown in Figure 16, the fingertips can easily engage the elongate recess 136. Further, if the user lifts the personal computer 1 up to his face under the condition that the user holds the same with the fingertips, the microphone 42 provided at the front end of the input and display casing 4 faces the mouth and the aforementioned voice memory operation portion 134 faces the eyes (as illustrated by a two-dot chain line in Figure 16). Therefore, the user can operate the operation buttons and knobs 135 a to 135 d with ease.

Though not shown, an IC (integrated circuit) memory for recording is mounted in the computer body portion 3, whereby ideas and memos can be recorded as a voice memo.

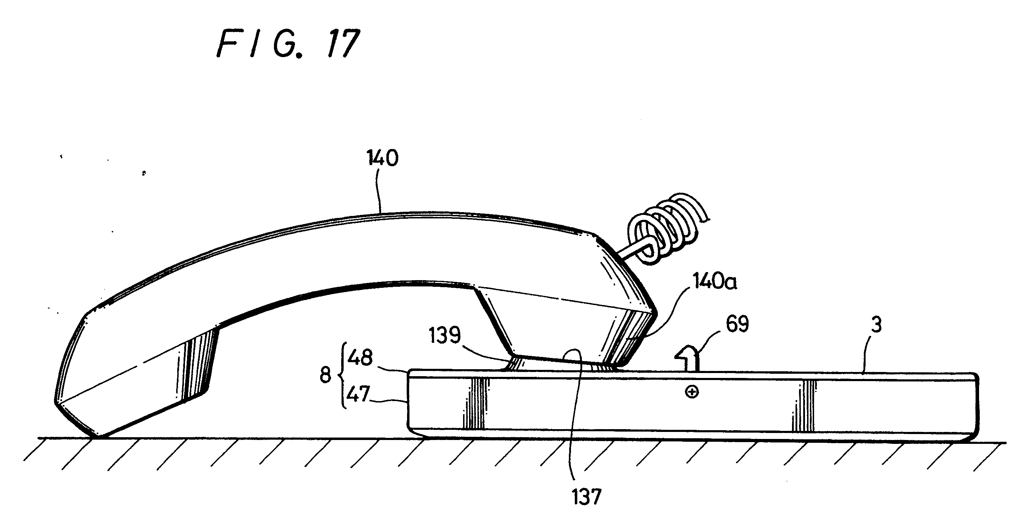

Referring to Figures 3 and 17, a handset portion 137 is formed on the right rear portion of the upper surface of the computer body casing 8. Sound emanating apertures are formed in the handset portion 137 at the positions corresponding to the speaker 12 to attached to the lower surface of the upper half 48.

A protruding rail 139 is shaped as a flat, rounded square so as to surround the sound emanating apertures 138. The edge of the protruding rail 139 is inclined in the lower left direction so that the left edge becomes low and the right edge becomes high.

Therefore, as shown in Figure 17, when a speaker portion 140 a of a handset 140 of a telephone is set on the protruding rail 139, the edges of the protruding rail 139 are brought in contact with as large an area as possible of the surface of the speaker portion 140 a and the handset 140 is stabilized.

This is very useful when address notes or telephone numbers programmed into the personal computer 1 or formed by the application software is utilized as a so-called auto-dialler.

In the personal computer 1, the liquid crystal tablet panel 5 and other necessary parts are provided on the input and display portion 2 and other parts are provided on the computer body portion 3, whereby the thickness of the input and display portion 2 are reduced as much as possible. Thus, the input of data by the input pen 6 can be made easier.

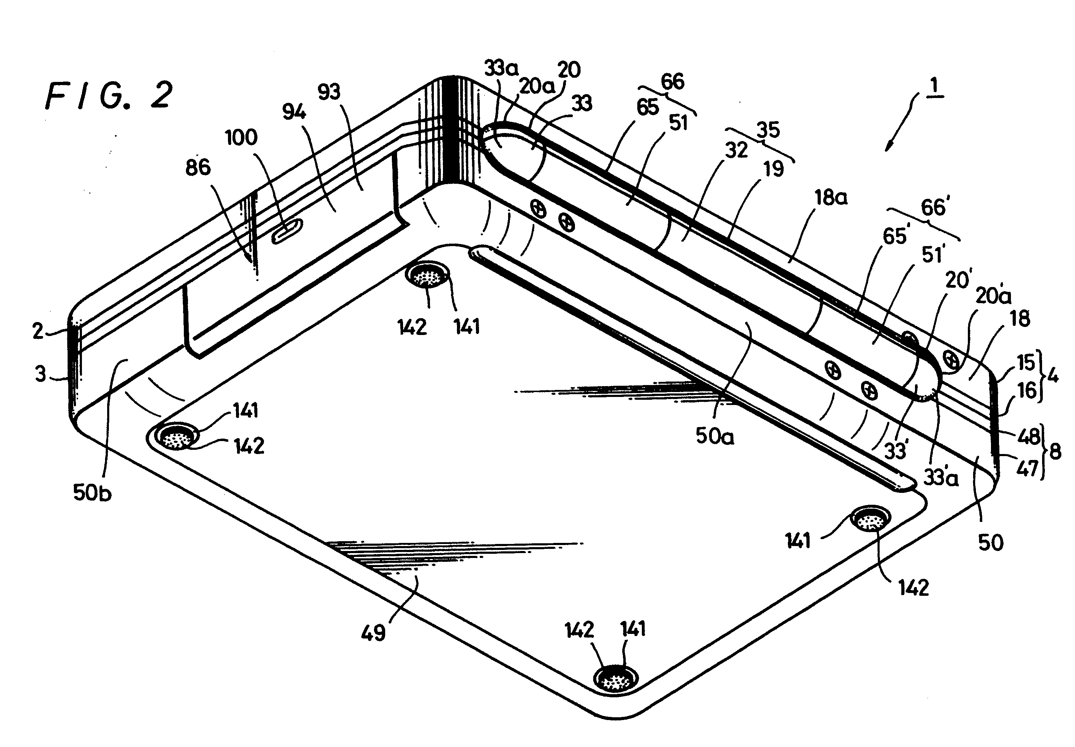

As shown in Figure 2, protrusions of small height 141 are formed on the lower surface of the lower half 47 of the computer body casing 8 at the positions corresponding to the four corners thereof and rubber pads 142 are embedded in the protrusions 141 whereby the personal computer 1 is prevented from being dislodged when it is placed on a slippery surface.

Small protrusions 143 shown in Figure 1 protrude from the lower surface of the lower part 15 of the input and display portion casing 4 at positions near the front, left and right edges.

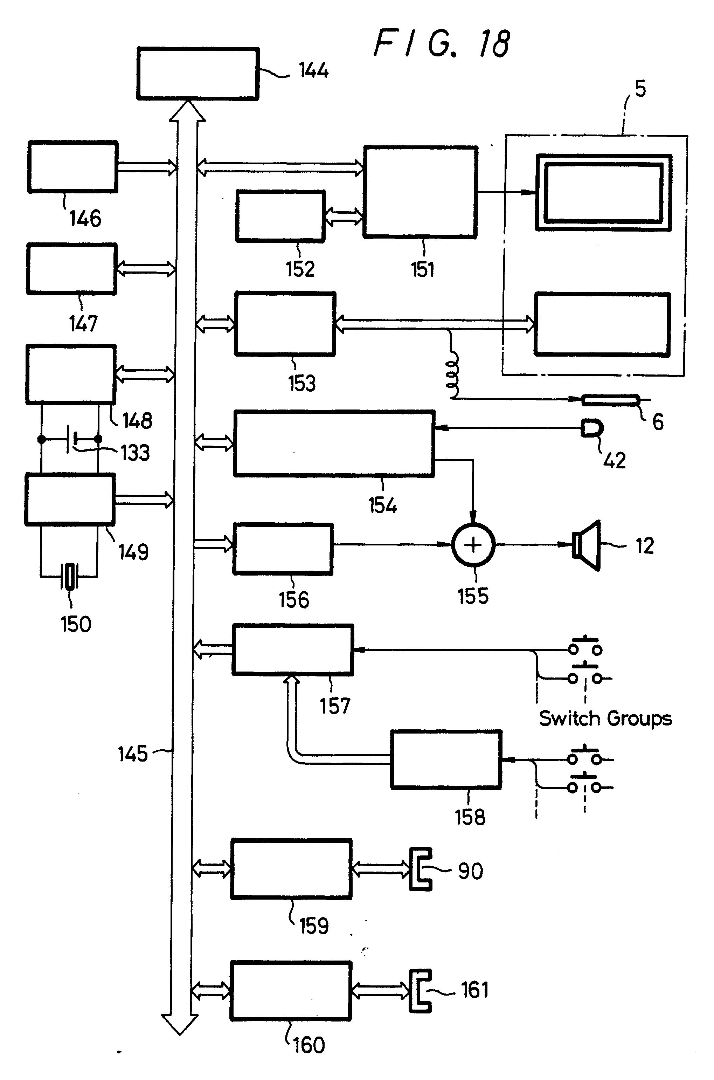

In the personal computer 1, incorporated hardware is arranged as shown in Figure 18.

As shown in Figure 18, a central processing unit (CPU) 144 is connected to a bus line 145 and various function ICs are connected to the CPU 144 via the bus line 145.

A read only memory (ROM) 146 can store therein for example, in addition to a system program for the whole of the computer, a Japanese Kanji character-Japanese Kana conversion program for a word processor for the Japanese language, dictionary data therefore, a recognition program for recognizing hand-written input, dictionary data therefore and the like.

A random access memory (RMA) 147 is used as a work area and a RAM 148 is a back-up RAM to which the power source 133 is connected. A timer IC 149 is driven by the power source 133 and counts pulses from a quartz oscillator 150, thereby always producing date data and clock data in a real time fashion.

A display controller 151 controls the display operation of the liquid crystal table panel 5. The display controller 151 is controlled by the CPU 144 and the display data formed by the CPU 144 is written in a video-RAM (V-RAM) 152. The data thus written in the V-RAM 152 is supplied through the controller 151 to the display portion of the liquid crystal tablet panel 5.

An input portion and interface circuit 153 is provided for the liquid crystal tablet panel 5 and for the input pen 6. Through this interface circuit 153, data written in the liquid crystal tablet panel 5 is supplied to the CPU 144.

A solid state recording processing circuit 154 is provided to process an audio signal from the microphone 42 in a predetermined processing fashion such as, analog-to-digital (A/D) conversion. The thus processed audio signal is supplied through the CPU 144 to the back-up RAM 148 and stored therein. Audio signal data stored in the back-up RAM 148 is processed in a predetermined processing fashion such as a digital-to-analog (D/A) conversion and the like by the processing circuit 154 and is then fed through a mixer 155 to the speaker 12.

A dialler circuit 156 generates an acoustic signal corresponding to a dual tone signal of a so-called push-phone when supplied with desired data such as a desired telephone number from the CPU 144. This acoustic signal from the dialler circuit 156 is supplied through the mixer 155 to the speaker 12.

A key interface circuit 157 is supplied with signals of the switch groups such as the operation buttons and operation dials 14, 135, directly or through a power source circuit 158. Then, the signal processed by the key interface circuit 157 in predetermined fashion is supplied to the CPU 144.

Interface circuits 159 and 160 are provided for the IC card and for the external equipment of this personal computer 1 upon expansion. The interface circuits 159 and 160 are connected to the card connector 90 and an expanding slot connector 161, respectively. Most of the aforementioned hardware is accommodated within the computer body casing 8.

In the portable computer 1, since the input and display portion 2 is covered when the second casing 8 is placed in the closed position, the input and display portion can be protected from being damaged. If the user carries the portable computer in this state, there is then little risk that the portable computer will be broken, which improves portability of the portable computer. Further, since the input and display portion is separated from other portions such as the signal processing circuit and the like and is provided on the first casing 4, the first casing 4 in which the input and display portion is provided can be made compact in size, in particular, the first casing can be reduced in thickness, which considerably improves the operation property of the input operation when the portable computer utilizes the so-called hand-witing input system.

While the present invention has been described as applied to a small personal computer it is not limited thereto and can be employed in a wide variety of application fields of electronic apparatus having an input and display portion serving as an input operation surface and an information display portion and a signal processing circuit for processing a signal inputted from the input and display portion, for example, a word processor or a very small computer.

**Claims**

1. A portable computer (1) comprising:
   (a) display means;
   (b) input means for inputting information;
   (c) an action surface (5) comprising a display screen visually to confirm the display means and an input surface of the input means provided flush with each other;
   (d) a first casing (4) including the display means and the input means;
   (e) a signal processing circuit to process the information inputted from the input means and to supply display information to the display means;
   (f) a second casing (8) including the signal processing circuit; and
   (g) coupling means (32, 33) rotatably to couple the first (4) and second (8) casings, wherein the coupling means allows rotation between first and second positions, the first position being a position in which the action surface (5) is covered by the second casing (8) and the second position being a position in which the action surface (5) is exposed so that an input operation on the input means and the display means can be visually confirmed.

2. A portable computer according to claim 1, wherein the input means overlaps the display means and is substantially transparent so as visually to confirm the display means.

3. A portable computer according to claim 1, wherein the coupling means (32, 33) allows rotation through substantially 180 degrees so that, when the casings (4, 8) are at the second position, the first casing (4) can be moved to be adjacent a user, enabling the user to perform an input operation.

FIG. 1

FIG. 2

EP 0 419 177 A2

FIG. 3

EP 0 419 177 A2

FIG. 4A

# F I G. 4B

*FIG. 5*

# FIG. 6

# FIG. 7

# FIG. 8

# F I G. 9A

# F I G. 9B

# FIG. 9C

# FIG. 9D

# F I G. 10

F I G. 11A

F I G. 11B

F I G. 11C

# F I G. 12A

EP 0 419 177 A2

FIG. 12B

27

# F I G. 12C

## F I G. 13A

## F I G. 13B

## F I G. 13C

## F I G. 13D

## F I G. 13E

## F I G. 13F

FIG. 14A

FIG. 14B

FIG. 14C

# F I G. 15A

FIG. 15B

# F I G. 16

F I G. 17

140

140a

139

8 { 48 47

69

3

137

EP 0 419 177 A2

# FIG. 18